# EUROPÄISCHE PATENTSCHRIFT

(11) **EP 1 567 752 B1**
(45) Veröffentlichungstag und Bekanntmachung des Hinweises auf die Patenterteilung: **16.04.2008**
(21) Anmeldenummer: 03772281.6
(22) Anmeldetag: 31.10.2003
(51) Int. Cl.: F01N 3/20, B01D 53/94, B01D 53/90

(54) **VORRICHTUNG UND VERFAHREN ZUR DOSIERUNG UND FÖRDERUNG VON TR OCKENEM HARNSTOFF, INSBESONDERE BEI DER DURCHFÜ HRUNG DES SCR -VERFAHRENS IN KRAFTFAHRZEUGEN**
DEVICE AND METHOD FOR DOSING AND TRANSPORTING DRY UREA, ESPECIALLY DURING THE IMPLEMENTATION OF THE SCR METHOD IN MOTOR VEHICLES
DISPOSITIF ET PROCEDE POUR DOSER ET ACHEMINER DE L'UREE A L'ETAT SEC, NOTAMMENT POUR LA MISE EN OEUVRE DU PROCEDE SCR DANS DES VEHICULES AUTOMOBILES

(30) Priorität: 04.11.2002 DE 10251498
(43) Veröffentlichungstag der Anmeldung: 31.08.2005
(73) Patentinhaber: Volkswagen AG, 38436 Wolfsburg (DE)
(72) Erfinder: KÄFER, Sebastian, 67655 Kaiserslautern (DE); MÜLLER, Werner, 67663 Kaiserslautern (DE); HERR, Andreas, 67659 Kaiserslautern (DE); LACROIX, Andreas, 67475 Weidenthal (DE)
(74) Vertreter: Patentanwälte Möll und Bitterich
(86) Internationale Anmeldenummer: PCT/EP2003/012142
(87) Internationale Veröffentlichungsnummer: WO 2004/042209

(56) Entgegenhaltungen:
- DE-A- 19 627 187
- US-A- 5 584 265
- US-A- 5 809 775
- US-B1- 6 301 879

## Beschreibung

Die Erfindung betrifft eine Vorrichtung und ein Verfahren zum Dosieren und Fördern von trockenem Harnstoff gemäß dem Patentanspruch 1 und dem Patentanspruch 27.

### Technisches Gebiet

Eine hohe Bevölkerungszunahme, gestiegene Industrialisierung und steigendes Verkehrsaufkommen führen zu einer Konzentration von Schadstoffen in der Umgebungsluft, die mittlerweile bedenkliche Ausmaße annimmt. Von besonderer Bedeutung sind in diesem Zusammenhang Stickoxydemissionen, die in großem Maße auf die Verbrennung von Benzin- und Dieselkraftstoffen in Automobilen zurückzuführen sind. Stickoxydemissionen tragen unter anderem zu erhöhten Ozonkonzentrationen in Bodennähe bei.

Um dieser bedenklichen Entwicklung entgegenzuwirken und aufgrund wiederholter Verschärfung der Schadstoffgrenzwerte durch den Gesetzgeber sind von den Automobilherstellern stets Anstrengungen unternommen worden, die beim Betrieb eines Kraftfahrzeugs entstehenden Stickoxydkonzentrationen zu verringern. Vielversprechend ist dabei die Anwendung des aus industriellen Anlagen bereits bekannten SCR-Verfahrens, bei dem dem Abgasstrom Ammoniak zugegeben wird. Dabei reagiert der Ammoniak mit den Stickoxyden unter Bildung von Stickstoff, Kohlendioxyd und Wasser.

Aufgrund des Gefahrenpotentials, das von Ammoniak ausgeht, ist das Mitführen von Ammoniak in einem Kraftfahrzeug problematisch. Man ist daher bereits auf den Gedanken gekommen, Ammoniak genau in der für die chemische Umsetzung erforderlichen Menge aus Harnstoff herstellen.

### Stand der Technik

Dieser Gedanke ist beispielsweise in der DE 40 38 054 A1 aufgegriffen, bei der eine wässrige Harnstofflösung in einem Behälter im Kraftfahrzeug mitgeführt und mit Hilfe eines Hydrolysekatalysators in Ammoniak und Kohlensäure aufgespalten wird. In der Praxis ergeben sich jedoch verschiedene Probleme mit der Verwendung einer wässrigen Harnstofflösung. Die Mitführung von wässrigem Harnstoff setzt nicht nur ein entsprechendes Platzangebot für den dafür erforderlichen Tank voraus, sondern steigert auch das Gesamtgewicht des Kraftfahrzeugs. Weitere Nachteile ergeben sich in Bezug auf die Wintertauglichkeit eines Fahrzeugs wegen des verhältnismäßig hohen Gefrierpunkts der Harnstofflösung. Außerdem muss beim Betrieb des Kraftfahrzeugs der Wasseranteil der Harnstofflösung verdampft werden, so dass diese Energie nicht mehr zur Erhöhung der Reaktionstemperatur zur Verfügung steht. Schließlich ist die Herstellung von wässrigen Harnstofflösungen teuer, da sie zur Vermeidung von Ablagerungen mit deionisiertem Wasser hergestellt werden.

In der Vergangenheit ist man daher auch schon dazu übergegangen, trockenen Harnstoff zur Erzeugung von Ammoniak einzusetzen, der, nachdem er in pulverförmige Konsistenz gebracht worden ist, mit Hilfe eines Trägerluftstroms zur Einsatzstelle transportiert wird. Voraussetzung hierfür ist jedoch, dass sich der Harnstoff in fließfähigem Zustand befindet. Ein Beispiel hierfür zeigt die US-A-5 584 265, bei der mit Hilfe einer Förderschnecke ein pulverförmiges Reduktionsmittel aus einem Vorratstank geholt, fein verteilt und über einen Luftstrom zur gewünschten Stelle transportiert wird. Diese Eigenschaft wird aber stark beeinträchtigt, wenn der trockene Harnstoff Feuchtigkeit, hohen Temperaturen oder mechanischem Druck ausgesetzt ist, da es dann zum Verbacken von Harnstoffpartikeln kommt. Weitere Probleme ergeben sich beim Transport fester Stoffe durch deren Neigung zur Brückenbildung, was in der Folge Verstopfungen in den Leitungen verursacht.

Beispielsweise sind aus der EP 0 615 777 A1 ein derartiges Verfahren und eine dazu gehörige Vorrichtung bekannt. Dort wird Harnstoff aus einem Vorratsbehälter mit Hilfe eines Präzisionsdosiergeräts einem Trägerluftstrom zugeführt. Das Präzisionsdosiergerät arbeitet nach dem Prinzip einer Förderschnecke, wobei eine Änderung der Dosierung über die Drehzahländerung der Förderschnecke erreicht wird. Der feste Harnstoff liegt entweder bereits im Vorratsbehälter pulverförmig vor oder wird bei Verwendung von größeren Teilchen vor dem Transport einem Mahlwerk zugeführt. Um die Aufnahme von Feuchtigkeit zu verhindern, wird dort vorgeschlagen, den trockenen Harnstoff unter Ausschluss von Luftfeuchtigkeit zu verpacken und die Verpackung erst nach Einbringung in den Vorratsbehälter zu öffnen.

Allerdings erweist sich die Verwendung luftdicht verpackter Harnstoffladungen als sehr aufwendig, da der Harnstoff zunächst unter Ausschluss von Feuchtigkeit luftdicht verpackt werden muss. Darüber hinaus dürfen die einzelnen Packungen nicht zu groß sein, da der Harnstoff auch im Vorratsbehälter aufgrund seiner hygroskopischen Eigenschaften im Laufe der Zeit Feuchtigkeit aufnimmt. Kleinere Harnstoffportionen bedingen aber ein häufiges Nachfüllen des Vorratsbehälters, was für den Nutzer eines Kraftfahrzeugs nur wenig komfortabel ist.

Zur Überwindung dieser Nachteile schlägt die DE 197 54 135 A1 vor, den Harnstoff in fester monolithischer Struktur mitzuführen. In Abhängigkeit des Bedarfs wird mit Hilfe einer Abtragvorrichtung kontinuierlich die entsprechende Menge an Harnstoff von einem Block abgetragen, gegebenenfalls der Harnstoff fein zermahlen, falls die Partikel noch zu groß sind, und der pulverförmige Harnstoff dann zum Transport einem Trägergasstrom aufgegeben. Die Abtragvorrichtung besteht aus einer rotierenden, mit Borsten, Schleifkörnern, Messern oder Fräswerkzeugen besetzten Scheibe oder Walze. Durch Veränderung der Vorschubgeschwindigkeit der Abtragvorrichtung gegenüber dem Harnstoffblock kann die Dosiermenge variiert werden.

Mit dieser Vorgehensweise ist zwar das Problem des Verbackens gelöst, andere Probleme bleiben jedoch bestehen. So ist hier die Aufbereitung des Harnstoffs zu monolithischen Blöcken notwendig, was mit einem entsprechenden Aufwand im Vorfeld verbunden ist. Ein weiterer Nachteil ergibt sich aus der Verwendung der dort beschriebenen Abtragvorrichtung. Beim Abtragen des Harnstoffblocks werden unvermeidlich Harnstoffteilchen unterschiedlicher Größe hergestellt. Dies führt dazu, dass die dem System zugeführte Harnstoffmenge in Abhängigkeit der Teilchen variiert. Eine genaue Dosierung entsprechend des momentanen Bedarfs ist, wenn überhaupt, dann nur innerhalb weiter Grenzen möglich.

Die DE 197 54 135 A1 schlägt auch schon die Verwendung eines zusätzlichen Mahlwerks vor, bei dem die von dem Harnstoffblock abgetragenen Teilchen auf Pulverform zerkleinert werden. Das hat allerdings den Nachteil, dass die Umwandlung des Harnstoffblocks zu pulverförmigem Harnstoff ein weiterer vorgeschalteter Verfahrensschritt darstellt, der die Reaktionszeit des Gesamtsystems negativ beeinflusst, d. h. das System zu träge wird. Dadurch kann der durch Lastwechsel bedingte Bedarf an Ammoniak kurzzeitig nicht befriedigt werden bzw. es entsteht kurzzeitig ein Überangebot.

Schließlich ist aus der US-A-5 809 775 auch schon eine Vorrichtung und ein Verfahren zur stationären Durchführung des SCR-Verfahrens bekannt, bei dem feste Ammoniakpartikel in einem Vorratsbehälter innerhalb eines Beutels angeordnet sind. Durch Beaufschlagung des zwischen dem Beutel und dem Vorratsbehälter befindlichen Raumes mit Druck werden die festen Ammoniakpartikel einem Injektor zugeführt, dessen Funktion darin besteht, die Feststoffpartikel zu vereinzeln. Nach deren Vereinzelung werden die Ammoniakpartikel einer Heizvorrichtung zugeleitet.

### Darstellung der Erfindung

Vor diesem Hintergrund liegt der Erfindung die Aufgabe zugrunde, ein Verfahren und eine Vorrichtung zur Dosierung und Förderung von trockenem Harnstoff anzugeben, die eine genaue Dosierung des Harnstoffs innerhalb weiter Mengenbereiche mit hoher Dynamik erlauben. Weitere Aufgabe ist der zuverlässige Transport des Harnstoffs zur Verarbeitungsstelle.

Diese Aufgabe wird durch eine Vorrichtung mit den Merkmalen des Patentanspruchs 1 sowie ein Verfahren mit den Merkmalen des Patentanspruchs 27 gelöst.

Vorteilhafte Ausführungsformen ergeben sich aus den Unteransprüchen.

Der Erfindung liegt der Gedanke zugrunde, für die Durchführung des SCR-Verfahrens Harnstoff in einer Form zu verwenden, wie er bereits in großen Mengen zur Verfügung steht. So wird in großem Umfang Harnstoff zur Düngung auf landwirtschaftlich genutzte Flächen aufgebracht. Der Harnstoff aus der Düngemittelindustrie entspricht in seiner Zusammensetzung, Form und Abmessungen den Anforderungen der Erfindung, das heißt er liegt in trockenem Zustand in kugelförmiger oder kugelähnlicher Gestalt vor. Derartiger Harnstoff wird im weiteren durch den Fachbegriff Pellet bezeichnet. Der Begriff Pellet ist im Sinne der vorliegenden Erfindung jedoch nicht auf kugelförmige oder kugelähnliche Gestalt beschränkt, die lediglich eine bevorzugte Verwendungsform darstellt. Vielmehr umfasst der im Sinne der Erfindung verwendete Begriff Pellet allgemein körniges Material, das ebenso gebrochen sein könnte.

Infolge der Massenherstellung in großen Industrieanlagen für die landwirtschaftliche Nutzung steht solcher Harnstoff in großen Mengen als Ausgangsstoff für die Erfindung und daher äußerst kostengünstig zur Verfügung. Grundsätzlich ist als Sollgröße für die einzelnen Pellets jede Größe möglich. Mit abnehmender Größe der Pellets lässt sich jedoch eine feinere Abstufung bei der Dosierung erreichen. Falls die Abmessungen der ansonsten für die Düngung verwendeten Pellets zu stark von der Sollgröße der Erfindung abweichen, erhält man durch einfache Siebung der Pellets eine geeignete Fraktion. Eine bevorzugte Fraktion umfasst Pellets mit Abweichungen von der Sollgröße im Bereich von etwa 5 %. Die von der Erfindung bevorzugte Sollgröße weist einen Durchmesser von 1 bis 3 mm auf.

Die Erfindung beschränkt sich aber nicht auf die Verwendung von Harnstoff in Pelletform, sondern umfasst gleichzeitig eine Vorrichtung, mit der es möglich ist, diese Pellets aus einem Vorratsbehälter in vorbestimmter Dosierung dem Umwandlungsprozess zu Ammoniak zuzuführen. Dies geschieht über Vereinzelung der Pellets und anschließende Weitergabe an einen Trägerluftstrom, der den weiteren Transport bewerkstelligt. Bei dieser Vorgehensweise ist daher die kleinstmöglich dosierbare Einzelmenge durch ein Pellet bestimmt. Durch sequentielle Vereinzelung und anschließendem Transport der Pellets wird ein Förderstrom erzeugt, wobei die Geschwindigkeit der Vereinzelung und des Transports für die Dosierung maßgebend sind.

Gemäß einer vorteilhaften Ausführungsform der Erfindung geschieht die Vereinzelung und Zuführung der Pellets zum Trägerluftstrom mit Hilfe einer Scheibe, Ringscheibe oder einem Hohlzylinderabschnitt, die oder der eine Vielzahl von Aufnahmen aufweist. Durch Rotation der Scheibe, Ringscheibe oder des Hohlzylinderabschnitts werden die Aufnahmen wechselweise in eine Position zum Befüllen und eine Position zum Ausblasen gebracht. Die Rotationsbewegung der Scheibe, Ringscheibe oder des Hohlzylinderabschnitts kann auf einfache Weise durch einen Drehantrieb, beispielsweise einen Elektromotor, ausgeführt werden. Die Änderung der Dosierung erfolgt dabei in einfacher Weise über die Drehzahländerung des Antriebs. Diese Vorgehensweise ermöglicht eine hohe Dynamik durch Drehzahländerungen und ist darüber hinaus sehr einfach und zuverlässig. Der unmittelbare Einfluß der Drehzahländerung auf die Dosierung führt zu sehr kurzen Reaktionszeiten des Gesamtsystems.

Eine Alternative zur Scheiben- oder Ringform oder zum Hohlzylinderabschnitt bildet ein schlittenförmiges Portionierelement, das eine hin- und herschwingende Bewegung ausführt. Neben motorischen Antrieben, deren Rotationsbewegung in eine Linearbewegung umgesetzt werden muss, wäre gemäß der Erfindung als Antrieb auch ein schwingender Elektromagnet denkbar.

Um sicherzustellen, dass die Pellets einzeln nacheinander dem Trägerluftstrom zugeführt werden, sind die Aufnahmen derart an die Form und Abmessungen der Pellets angepasst, dass jeweils nur ein Pellet darin Platz findet.

Beim Ausblasen der Pellets ist gemäß einer vorteilhaften Ausführungsform der Erfindung ist der Querschnitt der Ausblasöffnung gegenüber der Aufnahme größer ausgebildet, wodurch das Ausblasen des Pellets erleichtert wird.

Eine bevorzugte Ausführungsform der Erfindung sieht vor, dass die Transportleitung, in der ein Trägerluftstrom zum Transport der Pellets erzeugt wird, einen geringfügig größeren Querschnitt aufweist als es die maximale Größe der Pellets erfordern würde. Auf diese Weise kommt beim Transport der Pellets der "Blasrohreffekt" zum Tragen, das heißt, die Pellets bilden im Transportschlauch eine Art axial verschieblichen Pfropfen, der den Querschnitt des Transportschlauches fast vollständig ausfüllt und auf diese Weise verschließt. Die stromaufwärts wirkende Trägerluft erzeugt in der Transportleitung einen Überdruck, der für den Transport des Pellets in der Transportleitung ursächlich ist.

Diese Art und Weise des Transports hat den Vorteil, dass Brückenbildungen durch das zu transportierende Material ausgeschlossen sind. Ferner findet kein Schweben des Materials im Trägerluftstrom statt, da der Trägerluftstrom wie ein Luftpolster das Pellet vor sich herschiebt. Auf diese Weise gelingt es, die Transportleitung sowohl bergauf als auch bergab als auch in engen Windungen verlegen zu können, ohne dass es zu Störungen oder Schwankungen in der Dosierung der Pellets kommt.

Bevorzugt ist ferner eine Ausführungsform der Erfindung, bei der das Portionierelement teilweise von einer Blende abgedeckt ist. Die Blende übernimmt dabei eine Abstreiferfunktion und verhindert dadurch ein Einklemmen und Quetschen der Pellets während des Vereinzelungsvorgangs. Zusätzlich kann in die Blende die Druckluftdüse für den Trägerluftstrom integriert sein, so dass die Blende gleichzeitig für eine Abdichtung des Trägerluftstroms zum Behälterinneren hin sorgt.

In weiterer Ausbildung der Erfindung sind auf einer Umfangslinie des Portionierelements möglichst viele Aufnahmen vorgesehen. Das hat den Vorteil, dass zum Dosieren eine geringe Rotationsgeschwindigkeit des Portionierelements ausreicht und daher das Befüllen der Aufnahmen mit großer Sicherheit gewährleistet ist. Die mögliche Anzahl an Aufnahmen wird hauptsächlich durch den radialen Abstand der Aufnahmen von der Drehachse und dem gegenseitigen Abstand untereinander bestimmt. Der minimale gegenseitige Abstand der Aufnahmen kann nach einer Ausführungsform der Erfindung größer sein als der Durchmesser der Druckluftdüse, um zu erreichen, dass jeweils nur eine Aufnahme mit Druckluft beaufschlagt wird. Es ist ebenso möglich, den Abstand geringfügig kleiner zu wählen, so dass unabhängig von der Stellung des Portionierelements stets ein Trägerluftstrom in der Transportleitung vorherrscht.

Eine bevorzugte Ausführungsform der Erfindung sieht vor, den Abstand der Aufnahmen untereinander größer auszubilden als den Durchmesser der Druckluftdüse und gleichzeitig an einer bezüglich der Druckluftdüse stromabwärtsliegenden Stelle kontinuierlich Luft in die Transportleitung einzuleiten. Dazu kann beispielsweise ein Teil des Druckluftstroms stromaufwärts zur Druckluftdüse in einer Bypassleitung zur Transportleitung geführt sein. So wird sichergestellt, dass die Pellets nacheinander aus den Aufnahmen ausgeblasen werden und gleichzeitig ein kontinuierlicher Abtransport im Trägerluftstrom erfolgt. Dadurch wird die Leistungsfähigkeit und Betriebssicherheit der erfindungsgemäßen Vorrichtung gesteigert.

Der im Transportsystem vorherrschende Druck übersteigt vorteilhafterweise den Umgebungsdruck an der Austrittsstelle der Pellets aus der Transportleitung. Hieraus ergibt sich der Vorteil, dass keine Luft von außen in die Dosier- und Transporteinrichtung gelangen kann, womit stets die Gefahr verbunden ist, dass Feuchtigkeit von außen in das System dringt. Für den Betriebsstillstand, d. h. bei abgestelltem Motor, kann zusätzlich ein Sperrorgan vorhanden sein, das die Funktion der luftdichten Abschottung gegenüber Einflüssen von außen übernimmt.

Der Transport des Harnstoffs mittels eines Luft- oder Gasstroms bietet den zusätzlichen Vorteil, dass der Harnstoff während seines Transports gekühlt und vor Feuchtigkeit geschützt wird. Gegebenenfalls wird für den Trägerluftstrom nur trockene Luft verwendet, die beispielsweise in einem Klimakompressor erzeugt wird.

Da ein Verstopfen der Aufnahmen im Laufe der Zeit nicht vollständig auszuschließen ist, ist die Erfindung gemäß einer besonders vorteilhaften Ausführungsform mit einem Reinigungsmechanismus für die Aufnahmen ausgestattet. Der Reinigungsmechanismus weist ein oder mehrere Putzstifte auf, die im Zuge der Bewegung des Portionierelements die gerade entleerten Aufnahmen durchdringen und dabei eventuell verbliebene Pellets oder Pelletreste aus der Aufnahme stoßen. Dabei können die Putzstifte entweder längsverschieblich gelagert und über einen auf einer Welle sitzenden Nocken angetrieben sein oder auf einem Putzrad umfangseitig gleichmäßig verteilt und mit radialer Ausrichtung sitzen.

### Kurze Beschreibung der Zeichnungen

Die Erfindung wird nachstehend anhand eines in den Zeichnungen dargestellten Ausführungsbeispiels näher erläutert. Es zeigen
- Fig. 1: eine schematische Darstellung einer erfindungsgemäßen Dosier- und Fördereinrichtung zur Durchführung des SCR-Verfahrens,
- Fig. 2: eine räumliche Darstellung des Vorratsbehälters mit Dosiereinrichtung aus Fig. 1,
- Fig. 3: einen Vertikalschnitt durch den Fußbereich des Vorratsbehälters mit Dosier- und Fördereinrichtung entlang der in Fig. 4 dargestellten Linie III-III,
- Fig. 4: einen Horizontalschnitt durch die in Fig. 3 dargestellte Einrichtung entlang der dortigen Linie IV-IV und
- Fig. 5: eine isometrische Darstellung einer Ausführungsform der Dosiereinrichtung mit integriertem Reinigungsgsmechanismus.

### Wege zur Ausführung der Erfindung und gewerbliche Verwendbarkeit

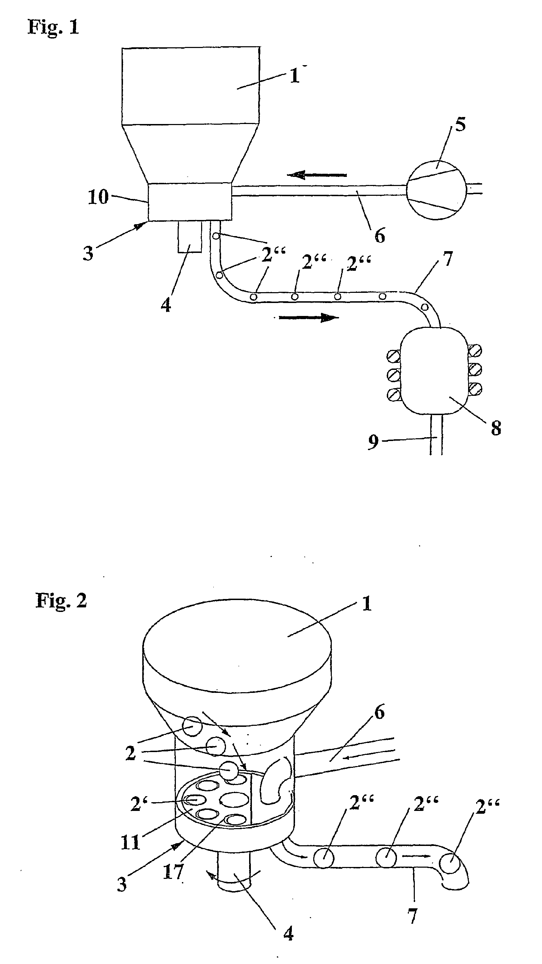

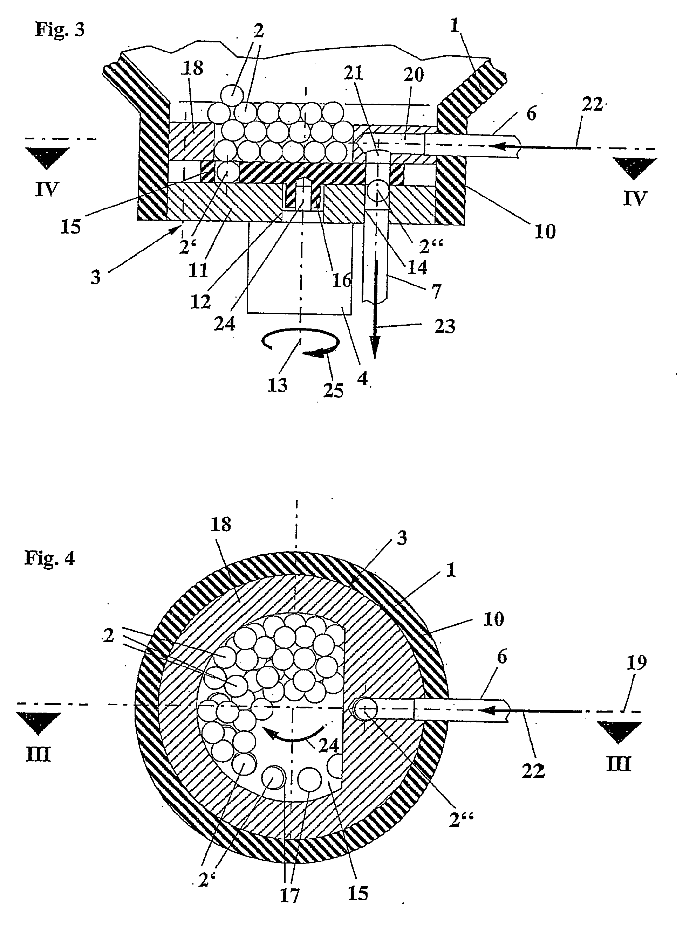

Die Fig. 1 und 2 zeigen in schematischer Darstellung eine Anlage zum Dosieren und Fördern von trockenem Harnstoff zur Durchführung des SCR-Verfahrens. Die Anlage umfasst einen Vorratsbehälter 1, der zur Speicherung einer Vielzahl von Harnstoffpellets 2 dient. Der Vorratsbehälter 1 weist in seinem oberen Bereich einen zylindrischen Abschnitt auf, der sich nach unten hin trichterförmig verengt. Im tiefsten Punkt des Vorratsbehälters 1 ist die Dosiereinrichtung 3 angeordnet. Die Dosiereinrichtung 3 wird später unter den Fig. 3 und 4 genauer erläutert. An der Unterseite der Dosiereinrichtung 3 sieht man schließlich einen Motor 4 als Antrieb für die Dosiereinrichtung 3.

Der Transport der Pellets 2 aus dem Vorratsbehälter 1 geschieht mit Hilfe einer Druckluftquelle 5, beispielsweise in Form eines Kompressors, die über die Druckleitung 6 an die Dosiereinrichtung 3 angeschlossen ist. Eine weitere Druckleitung 7 zum Transport der Pellets 2 verbindet die Dosiereinrichtung 3 mit einem Reaktor 8, in dem unter Einwirkung von Hitze die Umwandlung der Harnstoffpellets 2 zu Ammoniak stattfindet. Der erzeugte Ammoniak wird schließlich über die Leitung 9 in den Abgasstrom eines Verbrennungsmotors eingeleitet.

Die Fig. 3 und 4 zeigen die Dosiereinrichtung 3 mit Teilen der Transporteinrichtung. Man sieht zunächst den unteren trichterförmigen Teil des Vorratsbehälters 1, der in einem zylinderförmigen Ansatz 10 endet. Der zylinderförmige Ansatz 10 umschließt kraftschlüssig und gasdicht die Dosiereinrichtung 3, die auf diese Weise bei der im Ausführungsbeispiel gewählten Ausführungsform den Boden des Vorratsbehälters 1 bildet.

Die Dosiereinrichtung 3 besitzt eine Kreisscheibe 11, die bündig mit dem unteren Rand des zylinderförmigen Ansatzes 10 abschließt. In ihrem Kreismittelpunkt ist ein konzentrischer kreisförmiger Durchbruch 12 vorgesehen. Durch den Mittelpunkt und senkrecht zur Ebene der Kreisscheibe 11 verläuft die Rotationsachse 13. Außermittig, etwa zwischen dem Mittelpunkt und dem Rand der Kreisscheibe 11 ist eine zur Rotationsachse 13 achsparallele Bohrung 14 durch den Scheibenkörper geführt.

Zum Inneren des Vorratsbehälters 1 hin schließt sich an die Kreisscheibe 11 eine planparallel und koaxial angeordnete Portionierscheibe 15 an, die an ihrer der Kreisscheibe 11 zugewandten Unterseite einen sich mittig aus der Unterseite erstreckenden rohrstutzenförmigen Ansatz 16 aufweist. Die Portionierscheibe 15 sitzt mit dem Ansatz 16 unter Einhaltung eines minimalen Spiels in dem Durchbruch 12. Dabei bildet die Kreisscheibe 11 ein Gleitlager für die Portionierscheibe 15, auf der sie drehbar um die Rotationsachse 13 gelagert ist.

Die Portionierscheibe 15 weist eine Vielzahl achsparalleler Bohrungen auf, die sich von der Oberseite der Portionierscheibe 15 bis zu deren Unterseite erstrecken und auf einer gemeinsamen Umfangslinie gleichmäßig verteilt angeordnet sind. Jede der Bohrungen bildet eine Aufnahme 17 für jeweils ein Pellet 2. Der radiale Abstand der Aufnahmen 17 von der Rotationsachse 13 entspricht dem radialen Abstand der Bohrung 14 vom Mittelpunkt der Kreisscheibe 11, so dass durch Drehen der Portionierscheibe 15 die Aufnahmen 17 nacheinander in eine mit der Bohrung 14 fluchtende Position gebracht werden können.

Oberhalb der Portionierscheibe 15 sieht man eine ebenfalls planparallele in etwa ringförmige Blende 18, die zur Kreisscheibe 11 einen so großen Abstand einhält, dass darin die Rotation der Portionierscheibe 15 möglich ist. Der äußere Rand der Blende 18 schließt an die Innenwandung des zylinderförmigen Ansatzes 10 an, der innere Rand beschreibt über den größten Teil seines Umfangs einen konzentrischen Kreis, der in der axialen Projektion mit dem äußeren Rand der Portionierscheibe 15 eine Überlappung aufweist. Dabei bleiben die Aufnahmen 17 vom Inneren des Behälters 1 jedoch frei zugänglich. Lediglich im Bereich der Bohrung 14 ist die Blende 18 segmentartig vergrößert, so dass die Bohrung 14 in der Portionierscheibe 15 flächig überdeckt ist.

In Richtung der Symmetrieachse 19 erstreckt sich sowohl durch den Ansatz 10 des Vorratsbehälters 1 als auch durch die Blende 18 eine radiale Bohrung 20, welche über der Bohrung 14 der Portionierscheibe 15 endet. Senkrecht zur Bohrung 20 ist eine weitere zur Rotationsachse 13 parallele Bohrung 21 in die Blende 18 eingebracht, die mit der Bohrung 14 in der Kreisscheibe 11 fluchtet und mit der Bohrung 20 einen durchgängigen Kanal formt. Auf diese Weise dient die Blende 18 zusammen mit den Bohrungen 20 und 21 zur Bildung einer Druckluftdüse.

An die Bohrung 20 ist die von der Druckquelle 5 kommende Druckleitung 6 angeschlossen. Der Druckluftstrom ist durch den Pfeil 22 gekennzeichnet. An die Bohrung 14 der Kreisscheibe 11 ist die Druckleitung 7 angeschlossen, die zu dem Reaktor 8 (Fig. 1) führt. Der in der Druckleitung 7 vorherrschende Trägerluftstrom ist durch den Pfeil 23 gekennzeichnet.

Der für die Rotation der Portionierscheibe 15 erforderliche Antrieb wird von einem drehzahlgesteuerten Elektromotor 4 besorgt, der an der Unterseite der Kreisscheibe 11 unmittelbar unterhalb des Durchbruchs 12 befestigt ist und dessen Antriebswelle 24 in den rohrstutzenförmigen Ansatz 16 formschlüssig hineinreicht. Die Rotationsrichtung der Portionierscheibe 15 ist mit dem Pfeil 25 angegeben.

Beim Betrieb eines Kraftfahrzeugs wird zur Durchführung des SCR-Verfahrens in Abhängigkeit des jeweiligen Lastzustandes des Verbrennungsmotors eine bestimmte Menge an Ammoniak dem Abgasstrom zugeführt. Die erforderliche Menge Ammoniak wird erfindungsgemäß durch Umwandlung der Harnstoffpellets 2 im Reaktor 8 erreicht. Um dabei den Reaktor 8 stets mit einer ausreichenden Mange an Harnstoff zu versorgen, werden die Pellets 2 aus einem Vorratsbehälter 1 in der jeweils momentan notwendigen Menge dem Reaktor 8 zugeführt.

Dazu ist zunächst eine Vereinzelung der im Vorratsbehälter 1 zuhauf vorhandenen Pellets 2 erforderlich. Schwerkraftbedingt liegen die untersten Pellets 2 mit Kontakt auf der von der Blende 18 umschlossenen und frei zugänglichen Oberseite der Portionierscheibe 15 auf. Die Vereinzelung der Pellets erfolgt, indem die Pellets 2 infolge ihrer Schwerkraft in die Aufnahmen 17 der Portionierscheibe 15 gelangen. Dieser Vorgang geschieht bei anhaltender Rotation der Portionierscheibe 15, wobei infolge der Größe der Aufnahmen 17 jeweils nur ein Pellet 2 in die Aufnahmen 17 gelangt. Die in den Aufnahmen 17 befindlichen Pellets sind im weiteren mit 2' bezeichnet. Die maximale Rotationsgeschwindigkeit der Portionierscheibe 15 wird dadurch begrenzt, dass die Pellets 2 ein Minimum an Zeit benötigen, um die Aufnahmen 17 zu besetzen.

Im Zuge der Rotation der Portionierscheibe 15 werden die mit den Pellets 2' gefüllten Aufnahmen 17 nacheinander in eine Position gebracht, in der sie mit ihrer Oberseite der Druckluftdüse 18, 20, 21 gegenüberliegen und mit ihrer Unterseite mit der Bohrung 14 fluchten. Da die Druckluftdüse 18, 20, 21 mit Druckluft beaufschlagt ist, werden die Pellets 2' mit Erreichen dieser Position aus der Aufnahme 17 ausgeblasen und gelangen in die Transportleitung 7. In diesem Stadium werden die Pellets mit 2" bezeichnet.

Durch anhaltende Rotation des Portionierelements 15 gelangt eine ausgeblasene und dadurch leere Aufnahme 17 nach Durchwandern des von der Blende 18 abgedeckten Bereichs wieder zur Befüllung in den Vorratsbehälter 1, während eine andere nachfolgende, mit einem Pellet 2' besetzte Aufnahme 17 zur Druckluftdüse 18, 20, 21 geführt wird, wo das Ausblasen des nächsten Harnstoffpellets 2' erfolgt.

Die einzelnen Aufnahmen 17 in der Portionierscheibe 15 sind durch Stegbereiche vorbestimmter Breite getrennt. Bei der Rotation werden an der Druckluftdüse 18, 20, 21 abwechselnd Aufnahmen 17 und Stegbereiche vorbeigeführt, wobei die Stegbereiche eine Unterbrechung des Druckluftstroms 22 bewirken. Auf diese Weise entsteht ein intermittierender Trägerluftstrom 23. Durch Anordnung einer nicht dargestellten Bypassleitung die die Druckleitung 6 mit der Transportleitung 7 verbindet, kann ein intermittierender Druckluftstoß am Austritt der Düse 18, 20, 21 erzeugt werden, bei kontinuierlichem Transport der Pellets 2" in der Transportleitung 7.

Diese Art der Vereinzelung führt dazu, dass die Pellets 2' in einer zeitlichen Abfolge in die Transportleitung 7 gelangen, woraus sich ein räumlicher Abstand der Pellets 2" in der Transportleitung 7 ergibt. Durch die Abstimmung des Innendurchmessers der Transportleitung 7 auf die Abmessungen der Pellets 2 bilden sich in der Transportleitung 7 zwischen zwei aufeinanderfolgenden Pellets 2" Luftpolster, die von den einzelnen Pellets 2" getrennt und begrenzt werden und zwischen denen untereinander kein nennenswerter Luftaustausch stattfindet. Man spricht hier von einem "Blasrohreffekt", der gewährleistet, dass die Harnstoffpellets 2" in der Transportleitung 7 einen vorbestimmten Abstand einhalten und nicht aneinanderstoßen, was in der Folge Brückenbildungen und Verstopfungen verursachen kann. Die Größe des Luftpolsters ergibt den Abstand zweier Pellets 2" in der Leitung 7 und ist abhängig von der Luftmenge, die beim und zwischen dem Ausblasen zweier aufeinanderfolgender Pellets 2' aus den Aufnahmen 17 in die Transportleitung 17 gelangt. Die Luftpolster schieben die Pellets 2" unabhängig vom Verlauf der Transportleitung 7 vor sich her, wobei auch beliebige Höhenunterschiede und Kurvenradien bewältigt werden, bis die Pellets 2" schließlich in den Reaktor 8 eingespeist werden.

Die Veränderung der Dosierung des Harnstoffs erfolgt über eine Drehzahländerung der Portionierscheibe 15. Durch Erhöhung der Rotationsgeschwindigkeit gelangen die Pellets 2' in einer kürzeren zeitlichen Abfolge in die Transportleitung 7. Hingegen kann durch Verlangsamung der Rotationsgeschwindigkeit eine Verringerung der Dosierung erreicht werden. Auf diese Weise ist beispielsweise problemlos eine Dosierung von 0 Pellets pro Sekunde bis 40 Pellets pro Sekunde möglich, was einem Massenstrom von 0 g pro Stunde bis annähernd 600 g pro Stunde entspricht. Da eine Drehzahländerung des Antriebsmotors 4 und damit der Portionierscheibe 15 unmittelbar zu einer Veränderung der Dosierung führt, kann eine Anpassung der Harnstoffmenge an sich verändernde Lastzustände des Verbrennungsmotors sehr genau und mit großer Dynamik erfolgen.

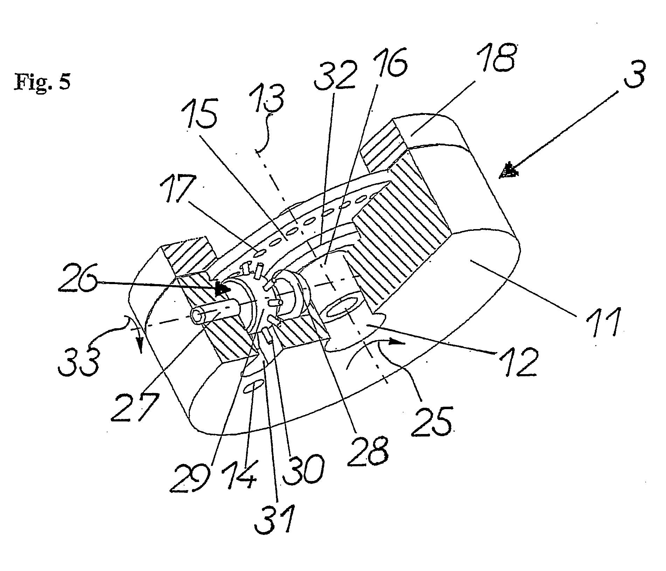

Da nicht vollständig ausgeschlossen werden kann, dass die Aufnahmen 17 im Laufe der Zeit mit Pellets 2 oder Pelletresten teilweise oder ganz verstopfen, ist gemäß einer bevorzugten Ausführungsform der Erfindung die Dossiereinrichtung 3 mit einem Reinigungsmechanismus 26 ausgestattet, der in Bewegungsrichtung des Portionierelements 15 der Druckluftdüse 18, 20, 21 nachgeschaltet ist und im folgenden anhand Figur 5 näher erläutert wird.

Figur 5 zeigt der besseren Übersichtlichkeit wegen lediglich die Dossiereinrichtung 3 ohne Vorratsbehälter 1, Druckleitungen 6 und 7 und Antriebsmotor 4. Man sieht die zwischen der Kreisscheibe 11 und der Blende 18 um die Rotationsachse 13 drehbar angeordnete Portionierscheibe 15 mit den Aufnahmen 17. Aus der Unterseite der Portionierscheibe 15 erstreckt sich zentral der rohrstutzenförmige Ansatz 16 , der in den Durchbruch 12 der Kreisscheibe 11 hineinreicht. Der rohrstutzenförmige Ansatz 16 ist konzentrisch von einem Zahnkranz 32 umgeben, der fest mit der Unterseite der Portionierscheibe 15 verbunden ist und der den einen Teil eines Winkelgetriebes bildet.

Der anderen Teil des Winkelgetriebes umfasst eine Antriebswelle 27, die unterhalb der Portionierscheibe 15 senkrecht zur Rotationsachse 13 frei drehbar in der Kreisscheibe 11 gelagert ist. Auf dem inneren Ende der Antriebswelle 27 sitzt ein kegelstumpfförmiges Ritzel 28, dessen Zähne in Eingriff mit dem Zahnkranz 32 stehen. Zusätzlich sitzt kraftschlüssig auf der Antriebswelle 27 eine Putzrad 29, das über seinen Umfang gleichmäßig mit radial ausgerichteten Putzstiften 30 versehen ist. Zur Aufnahme von Antriebswelle 27, Ritzel 28 und Putzrad 29 ist in der Kreisscheibe 11 ein entsprechender Hohlraum ausgebildet, der bis zur Unterseite der Kreisscheibe 11 fortgeführt ist und dort eine Öffnung 31 bildet.

Die Anordnung des Reinigungsmechanismus 26 innerhalb der Dossiereinrichtung 3 ist derart, dass er hinsichtlich der Rotationsbewegung 25 der Aufnahmen 17 der Druckluftdüse 18, 20, 21 nachgeschaltet ist und dass der Abstand des Putzrades 29 zur Portionierscheibe 15 ein Durchdringen der Aufnahmen 17 von den Putzstiften 30 ermöglicht.

Während des zuvor beschriebenen Betriebs der erfindungsgemäßen Vorrichtung wird die durch den Antriebsmotor 4 iniziierte Rotationsbewegung 25 der Portionierscheibe 15 über den Zahnkranz 32 auf das Ritzel 28 und im weiteren auf die Antriebswelle 27 und das Putzrad 29 überragen. Die Rotationsbewegung 25 der Portionierscheibe 15 läuft somit synchron zur Roationsbewegung 33 des Putzrades 29 mit den darauf angeordneten Putzstiften 30. Durch geeignete Anordnung der Putzstifte 30 auf dem Putzrad 29 greift dabei jeweils ein Putzstift 30 in eine Aufnahme 17 und hebt eventuell vorhandene Pellets 2' oder Pelletreste aus der Aufnahme 17. Dabei anfallende Harnstoffpartikel fallen schwerkraftbedingt durch die Öffnung 31 aus der Dossiereinrichtung 3. Auf diese Weise wird dauerhaft sichergestellt, dass stets leere Aufnahmen 17 zur Vereinzelung und Dosierung der im Vorratsbehälter 1 befindlichen Pellets 2 zur Verfügung stehen.

## Patentansprüche

1. Vorrichtung zum Dosieren und Fördern von trockenem Harnstoff, insbesondere zur Durchführung des SCR-Verfahrens in einem Kraftfahrzeug,
- mit einem Vorratsbehälter (1), in dem der trockene Harnstoff in Form von Pellets (2) vorliegt, **dadurch gekennzeichnet dass** die Wand des Vorratsbehälters (1) eine Öffnung (14) aufweist, an die außenseitig eine Transportleitung (7) angeschlossen ist,
- mit einer Druckluftdüse (18, 20, 21), die innerhalb des Vorratsbehälters (1) im Abstand zur Öffnung (14) angeordnet, auf die Öffnung (14) ausgerichtet und mit Druckluft beaufschlagbar ist,
- mit einem Portionierelement (15), das eine zum Inneren des Vorratsbehälters (1) weisende Oberseite und eine der Wand des Vorratsbehälters (1) gegenüberliegende Unterseite aufweist, wobei zur Bildung von einer oder mehreren Aufnahmen (17) für die Pellets (2) mindestens ein durchgängiger Kanal, dessen Querschnitt größer ist als die Abmessungen der Pellets (2), Oberseite und Unterseite verbindet,
- wobei das Portionierelement (15) derart beweglich zwischen der Druckluftdüse (18, 20, 21) und der Wand des Vorratsbehälters (1) gelagert ist, dass es wechselweise aus einer Position, in der die Aufnahmen (17) von der Oberseite des Portionierelements (15) frei zugänglich sind, in eine Position bringbar ist, in der die Aufnahmen (17) fluchtend zwischen der Druckluftdüse (18, 20, 21) und Öffnung (14) angeordnet sind.

2. Vorrichtung nach Anspruch 1, **dadurch gekennzeichnet, dass** das Portionierelement (15) eine Scheibe, Ringscheibe oder Hohlzylinderabschnitt umfasst, die zwischen der Druckluftdüse (18, 20, 21) und der Wand des Behälters (1) drehbar gelagert ist.

3. Vorrichtung nach Anspruch 2, **dadurch gekennzeichnet, dass** das Portionierelement (15) eine Vielzahl achsparalleler Aufnahmen (17) oder radialer Aufnahmen aufweist, die auf einer Umfangslinie angeordnet sind und untereinander den gleichen Abstand aufweisen.

4. Vorrichtung nach Anspruch 2 oder 3, **dadurch gekennzeichnet, dass** die Aufnahmen (17) in einem möglichst großen radialen Abstand zur Rotationsachse (13) angeordnet sind.

5. Vorrichtung nach einem der Ansprüche 2 bis 4, **dadurch gekennzeichnet, dass** die Rotationsgeschwindigkeit des Portionierelements (15) zur Einstellung und Veränderung der Dosierung variabel ist.

6. Vorrichtung nach Anspruch 1, **dadurch gekennzeichnet, dass** das Portionierelement einen Schlitten umfasst, der entlang einer Linearführung hin- und herbewegbar ist.

7. Vorrichtung nach Anspruch 6, **dadurch gekennzeichnet, dass** die Aufnahmen parallel zur Bewegungsrichtung des Schlittens angeordnet sind.

8. Vorrichtung nach Anspruch 6 oder 7, **dadurch gekennzeichnet, dass** der Schlitten elektromagnetisch angetrieben ist.

9. Vorrichtung nach einem der Ansprüche 1 bis 8, **dadurch gekennzeichnet, dass** die Pellets (2) eine Sollgröße im Durchmesser oder der Diagonalen von 1 bis 5 mm, vorzugsweise 2 bis 3 mm, höchst vorzugsweise 1,9 mm aufweisen.

10. Vorrichtung nach Anspruch 9, **dadurch gekennzeichnet, dass** die Abweichungen der Pellets (2) von der Sollgröße unter 10 %, vorzugsweise 5% liegen.

11. Vorrichtung nach einem der Ansprüche 1 bis 10, **dadurch gekennzeichnet, dass** die Aufnahmen (17) in der Tiefe und im Querschnitt so ausgebildet sind, dass jeweils ein Pellet (2) darin Platz findet.

12. Vorrichtung nach einem der Ansprüche 1 bis 11, **dadurch gekennzeichnet, dass** die Aufnahmen (17) einen minimalen gegenseitigen Abstand aufweisen, der größer ist als der Austrittsdurchmesser der Druckluftdüse (18, 20, 21).

13. Vorrichtung nach einem der Ansprüche 1 bis 12, **dadurch gekennzeichnet, dass** die Transportleitung (7) einen Anschluss zur Einleitung von Druckluft aufweist.

14. Vorrichtung nach einem der Ansprüche 1 bis 13, **dadurch gekennzeichnet, dass** die Druckluftleitung (6) stromaufwärts der Druckluftdüse (18,20,21) und die Transportleitung (7) stromabwärts der Druckluftdüse (18,20,21) durch eine Bypassleitung miteinander verbunden sind.

15. Vorrichtung nach einem der Ansprüche 1 bis 14, **dadurch gekennzeichnet, dass** die Aufnahmen (17) einen minimalen gegenseitigen Abstand aufweisen, der kleiner ist als der Austrittsdurchmesser der Druckluftdüse (18, 20, 21).

16. Vorrichtung nach einem der Ansprüche 1 bis 15, **dadurch gekennzeichnet, dass** die Öffnung (14) in der Wand des Behälters (1) einen mindestens gleich großen Querschnitt wie die Aufnahmen (17) besitzt, vorzugsweise einen größeren Querschnitt.

17. Vorrichtung nach einem der Ansprüche 1 bis 16, **dadurch gekennzeichnet, dass** die Transportleitung (7) einen lichten Querschnitt aufweist, der geringfügig größer ist als die maximale Abmessung der Pellets (2).

18. Vorrichtung nach einem der Ansprüche 1 bis 17, **dadurch gekennzeichnet, dass** die oberseitigen Ränder des Portionierelements (15) von einer Blende (18) überdeckt sind.

19. Vorrichtung nach Anspruch 18, **dadurch gekennzeichnet, dass** die Druckluftdüse (18, 20, 21) in die Blende (18) integriert ist.

20. Vorrichtung nach einem der Ansprüche 1 bis 19, **dadurch gekennzeichnet, dass** der Druck in der Transportleitung (7) größer ist als der Umgebungsdruck, vorzugsweise um 01, bis 1,0 bar, höchst vorzugsweise um mindestens 0,5 bar.

21. Vorrichtung nach einem der Ansprüche 1 bis 20, **dadurch gekennzeichnet, dass** der Druckluftdüse (18, 20, 21) eine Reinigungseinheit (26) nachgeschaltet ist, die die Aufnahmen (17) von Harnstoffresten befreit.

22. Vorrichtung nach Anspruch 21, **dadurch gekennzeichnet, dass** die Reinigungseinheit (26) mindestens einen Putzstift (29) aufweist, der die Aufnahmen (17) durchdringt.

23. Vorrichtung nach Anspruch 22, **dadurch gekennzeichnet, dass** der Putzstift quer zur Ebene des Portionierelements 15 längsverschieblich gelagert und angetrieben ist.

24. Vorrichtung nach Anspruch 22, **dadurch gekennzeichnet, dass** der oder die Putzstifte (30) mit radialer Ausrichtung um eine Antriebswelle (33) angeordnet sind, die parallel zur Ebene des Portionierelements 15 und quer zur Bewegungsrichtung der Aufnahmen (17) verläuft, wobei der oder die Putzstifte (30) im Zuge ihrer Rotation die Aufnahmen (17) durchdringen.

25. Vorrichtung nach einem der Ansprüche 22 bis 24, **dadurch gekennzeichnet, dass** die Bewegung des oder der Putzstifte (30) an die Bewegung der Portionierelements (15) gekoppelt ist.

26. Vorrichtung nach Anspruch 24 oder 25, **dadurch gekennzeichnet, dass** das Portionierelement (15) über ein Winkelgetriebe mit der Antriebswelle (33) verbunden ist.

27. Verfahren zum Dosieren und Fördern von trockenem Harnstoff aus einem Vorratsbehälter (1) zu einer Verarbeitungsstätte (8), **dadurch gekennzeichnet, dass** der Harnstoff in Form von Pellets (2) vorliegt, die Pellets (2) vereinzelt und dann einem Trägerluftstrom (23) aufgegeben werden.

28. Verfahren nach Anspruch 27, **dadurch gekennzeichnet, dass** die Vereinzelung der Pellets (2) mit Hilfe eines Portionierelements (15) erfolgt, das eine oder mehrere Aufnahmen (17) für jeweils ein Pellet (2) aufweist, in die die Pellets (2) gelangen.

29. Verfahren nach Anspruch 27 oder 28, **dadurch gekennzeichnet, dass** die Aufgabe der Pellets (2) an einen Trägerluftstrom (23) durch Zuführung der Aufnahmen (17) zu einer Druckluftdüse (18, 20, 21) erfolgt, wo die Pellets (2) ausgeblasen werden.

30. Verfahren nach einem der Ansprüche 27 bis 29, **dadurch gekennzeichnet, dass** die Dosierung der Pellets (2) durch Regulierung der Bewegungsgeschwindigkeit des Portionierelements (15) und/oder durch Regulierung der Geschwindigkeit des Trägerluftstroms (23) erfolgt.

31. Verfahren nach einem der Ansprüche 27 bis 30, **dadurch gekennzeichnet, dass** in der Transportleitung (7) ein stetiger Trägerluftstrom (23) herrscht.

32. Verfahren nach einem der Ansprüche 27 bis 31, **dadurch gekennzeichnet, dass** in die Transportleitung (7) stromabwärts der Druckluftdüse (18, 20, 21) zusätzlich Druckluft eingeleitet wird.

33. Verfahren nach Anspruch 32, **dadurch gekennzeichnet, dass** die zusätzliche Druckluft stromaufwärts der Druckluftdüse (18, 20, 21) entnommen wird.

34. Verfahren nach einem der Ansprüche 27 bis 33, **dadurch gekennzeichnet, dass** die Aufnahmen (17) mit einem intermittierenden Druckluftstrom (22) ausgeblasen werden.

35. Verfahren nach einem der Ansprüche 27 bis 34, **dadurch gekennzeichnet, dass** die Aufnahmen (17) nach dem Ausblasen gereinigt werden.

36. Verfahren zum Dosieren und Fördern von trockenem Harnstoff aus einem Vorratsbehälter (1) zu einer Verarbeitungsstätte (8), bei dem der Harnstoff in Form von Pellets (2) vorliegt und die Pellets (2) vereinzelt werden, **dadurch gekennzeichnet, dass** die Pellets (2') in einer zeitlichen Abfolge einem innerhalb einer Transportleitung (7) vorherrschenden Trägerluftstrom (23) aufgegeben werden, wobei aufeinanderfolgende Pellets (2") jeweils einzelne Luftpolster bilden, zwischen denen untereinander kein nennenswerter Luftaustausch stattfindet.

## Claims

1. Device for metering and feeding dry urea, in particular for carrying out the SCR process in a motor vehicle,
- having a storage tank (1) in which the dry urea is present in the form of pellets (2), **characterized in that** the wall of the storage tank (1) has an opening (14) to which a transport line (7) is connected at the outside,
- having a compressed air nozzle (18, 20, 21) which is arranged within the storage tank (1) at a distance from the opening (14), and which is aligned towards the opening (14) and can be acted on with compressed air,
- having an apportioning element (15) which has an upper side, which points towards the interior of the storage tank (1), and an underside which is situated opposite the wall of the storage tank (1), with at least one continuous duct, whose cross section is larger than the dimensions of the pellets (2), connecting the upper side and lower side in order to form one or more receptacles (17) for the pellets (2),
- with the apportioning element (15) being mounted so as to be movable between the compressed air nozzle (18, 20, 21) and the wall of the storage tank (1) in such a way that it can be selectively moved from a position in which the receptacles (17) are freely accessible from the upper side of the apportioning element (15) into a position in which the receptacles (17) are arranged in alignment between the compressed air nozzle (18, 20, 21) and the opening (14).

2. Device according to Claim 1, **characterized in that** the apportioning element (15) comprises a disc, annular disc or hollow cylindrical section which is mounted so as to be rotatable between the compressed air nozzle (18, 20, 21) and the wall of the tank (1).

3. Device according to Claim 2, **characterized in that** the apportioning element (15) has a plurality of axially parallel receptacles (17) or radial receptacles which are arranged on a peripheral line and have the same spacing to one another.

4. Device according to Claim 2 or 3, **characterized in that** the receptacles (17) are arranged at the greatest possible radial distance from the rotational axis (13).

5. Device according to one of Claims 2 to 4, **characterized in that** the rotational speed of the apportioning element (15) is variable in order to set and vary the dosage.

6. Device according to Claim 1, **characterized in that** the apportioning element comprises a carriage which is movable in a reciprocating fashion along a linear guide.

7. Device according to Claim 6, **characterized in that** the receptacles are arranged parallel to the movement direction of the carriage.

8. Device according to Claim 6 or 7, **characterized in that** the carriage is driven electromagnetically.

9. Device according to one of Claims 1 to 8, **characterized in that** the pellets (2) have a nominal size in diameter or in the diagonal of 1 to 5 mm, preferably 2 to 3 mm, particularly preferably 1.9 mm.

10. Device according to Claim 9, **characterized in that** the deviations of the pellets (2) from the nominal size are below 10%, preferably 5%.

11. Device according to one of Claims 1 to 10, **characterized in that** the receptacles (17) are formed in depth and in cross section such that in each case one pellet (2) can fit therein.

12. Device according to one of Claims 1 to 11, **characterized in that** the receptacles have a minimum spacing to one another which is greater than the outlet diameter of the compressed air nozzle (18, 20, 21).

13. Device according to one of Claims 1 to 12, **characterized in that** the transport line (7) has a connection for the introduction of compressed air.

14. Device according to one of Claims 1 to 13, **characterized in that** the compressed air line (6) upstream of the compressed air nozzle (18, 20, 21) and the transport line (7) downstream of the compressed air nozzle (18, 20, 21) are connected to one another by means of a bypass line.

15. Device according to one of Claims 1 to 14, **characterized in that** the receptacles (17) have a minimum spacing to one another which is smaller than the outlet diameter of the compressed air nozzle (18, 20, 21).

16. Device according to one of Claims 1 to 15, **characterized in that** the opening (14) in the wall of the tank (1) has a cross section which is at least the same size as the receptacles (17), preferably a larger cross section.

17. Device according to one of Claims 1 to 16, **characterized in that** the transport line (7) has a clear cross section which is slightly larger than the maximum dimension of the pellets (2).

18. Device according to one of Claims 1 to 17, **characterized in that** the upper-side edges of the apportioning element (15) are covered by a faceplate (18).

19. Device according to Claim 18, **characterized in that** the compressed air nozzle (18, 20, 21) is integrated into the faceplate (18).

20. Device according to one of Claims 1 to 19, **characterized in that** the pressure in the transport line (7) is greater than the ambient pressure, preferably by 0.1 to 1.0 bar, most preferably by at least 0.5 bar.

21. Device according to one of Claims 1 to 20, **characterized in that** a cleaning unit (26) is connected downstream of the compressed air nozzle (18, 20, 21), which cleaning unit (26) frees the receptacles (17) of urea residues.

22. Device according to Claim 21, **characterized in that** the cleaning unit (26) has at least one cleaning pin (29) which extends through the receptacles (17).

23. Device according to Claim 22, **characterized in that** the cleaning pin is mounted and driven so as to be longitudinally movable transversely with respect to the plane of the apportioning element (15).

24. Device according to Claim 22, **characterized in that** the cleaning pin(s) (30) are arranged with radial alignment around a driveshaft (33) which runs parallel to the plane of the apportioning element (15) and transversely with respect to the movement direction of the receptacles (17), with the cleaning pin(s) (30), during the course of their rotation, extending through the receptacles (17).

25. Device according to one of Claims 22 to 24, **characterized in that** the movement of the cleaning pin(s) (30) is coupled to the movement of the apportioning element (15).

26. Device according to Claim 24 or 25, **characterized in that** the apportioning element (15) is connected by means of an angular gear to the driveshaft (33).

27. Method for metering and feeding dry urea from a storage tank (1) to a processing station (8), with the urea being present in the form of pellets (2), the pellets (2) being separated and then being dispensed to a carrier air flow (23), **characterized in that** the separation of the pellets (2) takes place by means of an apportioning element (15) which has one or more receptacles (17), for in each case one pellet (2), into which the pellets (2) pass.

28. Method according to Claim 27, **characterized in that** the dispensation of the pellets (2) to a carrier air flow (23) takes place by supplying the receptacles (17) to a compressed air nozzle (18, 20, 21), where the pellets (2) are blown out.

29. Method according to Claim 27 or 28, **characterized in that** the dosing of the pellets (2) takes place by regulating the movement speed of the apportioning element (15) and/or by regulating the speed of the carrier air flow (23).

30. Method according to one of Claims 27 to 29, **characterized in that** a constant carrier air flow (23) prevails in the transport line (7).

31. Method according to one of Claims 27 to 30, **characterized in that** compressed air is additionally introduced into the transport line (7) downstream of the compressed air nozzle (18, 20, 21).

32. Method according to Claim 31, **characterized in that** the additional compressed air is extracted upstream of the compressed air nozzle (18, 20, 21).

33. Method according to Claim 27 or 32, **characterized in that**, in the transport line (7) an excess pressure, preferably of 0.1 to 1.0 bar, most preferably of at least 0.5 bar, with respect to the ambient pressure is present at the end of the transport line (7).

34. Method according to one of Claims 27 to 33, **characterized in that** the receptacles (17) are blown out by means of an intermittent compressed air flow (22).

35. Method according to one of Claims 27 to 34, **characterized in that** the receptacles (17) are cleaned after the blowing-out process.

36. Method for metering and feeding dry urea from a storage tank (1) to a processing station (8), with the urea being present in the form of pellets (2) and the pellets (2) being separated, **characterized in that** the pellets (2') are dispensed in chronological succession to a carrier air flow (23) which prevails within a transport line (7), with successive pellets (2") forming in each case separate air cushions between which no appreciable exchange of air takes place.

## Revendications

1. Dispositif de dosage et de transport d'urée sèche, en particulier en vue de l'exécution du procédé SCR dans un véhicule automobile, qui présente :
- un récipient de réserve (1) dans lequel l'urée sèche présente la forme de pastilles (2), la paroi du récipient de réserve (1) présentant une ouverture (14) sur le côté extérieur de laquelle est raccordé un conduit de transport (7),
- une tuyère à air comprimé (18, 20, 21) disposée à l'intérieur du récipient de réserve (1) à distance de l'ouverture (14), alignée sur l'ouverture (14) et alimentée en air comprimé,
- un élément de dosage (15) qui présente un côté supérieur tourné vers l'intérieur du récipient de réserve (1) et un côté inférieur opposé à la paroi du récipient de réserve (1), au moins un canal continu dont la section transversale est plus grande que les dimensions des pastilles (2) reliant le côté supérieur et le côté inférieur pour former un ou plusieurs logements (17) pour les pastilles (2),
- l'élément de dosage (15) étant monté de manière mobile entre la tuyère à air comprimé (18, 20, 21) et la paroi du récipient de réserve (1) de manière à pouvoir être amené en alternance depuis une position dans laquelle les logements (17) sont librement accessibles par le côté supérieur de l'élément de dosage (15) jusque dans une position dans laquelle les logements (17) sont alignés entre la tuyère à air comprimé (18, 20, 21) et l'ouverture (14).

2. Dispositif selon la revendication 1, **caractérisé en ce que** l'élément de dosage (15) comprend une plaque, une plaque annulaire ou un tronçon de cylindre creux monté à rotation entre la tuyère à air comprimé (18, 20, 21) et la paroi du récipient (1).

3. Dispositif selon la revendication 2, **caractérisé en ce que** l'élément de dosage (15) présente plusieurs logements (17) à axes parallèles ou plusieurs logements radiaux disposés à des écarts égaux sur une ligne périphérique.

4. Dispositif selon les revendications 2 ou 3, **caractérisé en ce que** les logements (17) sont disposés à un écart radial aussi grand que possible de l'axe de rotation (13).

5. Dispositif selon l'une des revendications 2 à 4, **caractérisé en ce que** la vitesse de rotation de l'élément de dosage (15) peut être modifiée pour ajuster et modifier le dosage.

6. Dispositif selon la revendication 1, **caractérisé en ce que** l'élément de dosage comprend un coulisseau qui peut se déplacer en va-et-vient sur un guide linéaire.

7. Dispositif selon la revendication 6, **caractérisé en ce que** les logements sont disposés parallèlement à la direction de déplacement du coulisseau.

8. Dispositif selon les revendications 6 ou 7, **caractérisé en ce que** le coulisseau est entraîné par des moyens électromagnétiques.

9. Dispositif selon l'une des revendications 1 à 8, **caractérisé en ce que** les pastilles (2) ont une taille nominale en diamètre ou en diagonale de 1 à 5 mm, de préférence de 2 à 3 mm et de façon surtout préférable de 1, 9 mm.

10. Dispositif selon la revendication 9, **caractérisé en ce que** les écarts des pastilles (2) par rapport à leur taille nominale sont inférieurs à 10 % et de préférence à 5 %.

11. Dispositif selon l'une des revendications 1 à 10, **caractérisé en ce que** les logements (17) ont une profondeur et une section transversale telles qu'une seule pastille (2) respective peut s'y loger.

12. Dispositif selon l'une des revendications 1 à 11, **caractérisé en ce que** les logements ont un écart mutuel minimum, qui est supérieur au diamètre de sortie de la tuyère à air comprimé (18, 20, 21).

13. Dispositif selon l'une des revendications 1 à 12, **caractérisé en ce que** le conduit de transport (7) présente un raccordement qui permet d'amener de l'air comprimé.

14. Dispositif selon l'une des revendications 1 à 13, **caractérisé en ce que** le conduit (6) d'air comprimé situé en amont de la tuyère à air comprimé (18, 20, 21) et le conduit de transport (7) situé en aval de la tuyère à air comprimé (18, 20, 21) sont reliés l'un à l'autre par un conduit de dérivation.

15. Dispositif selon l'une des revendications 1 à 14, **caractérisé en ce que** les logements (17) ont un écart mutuel minimum, qui est inférieur au diamètre de sortie de la tuyère à air comprimé (18, 20, 21).

16. Dispositif selon l'une des revendications 1 à 15, **caractérisé en ce que** l'ouverture (14) ménagée dans la paroi du récipient (1) a une section transversale au moins aussi grande que les logements (17) et de préférence une section transversale plus grande.

17. Dispositif selon l'une des revendications 1 à 16, **caractérisé en ce que** le conduit de transport (7) a une section transversale intérieure légèrement plus grande que la dimension maximale des pastilles (2).

18. Dispositif selon l'une des revendications 1 à 17, **caractérisé en ce que** les bords supérieurs de l'élément de dosage (15) sont recouverts par un écran (18).

19. Dispositif selon la revendication 18, **caractérisé en ce que** la tuyère à air comprimé (18, 20, 21) est intégrée dans l'écran (18).

20. Dispositif selon l'une des revendications 1 à 19, **caractérisé en ce que** la pression dans le conduit de transport (7) est supérieure à la pression ambiante, de préférence de 0,1 à 1,0 bar et de la façon la plus préférable d'au moins 0,5 bar.

21. Dispositif selon l'une des revendications 1 à 20, **caractérisé en ce qu'**une unité de nettoyage (26) qui débarrasse les logements (17) des résidus d'urée est raccordée en aval de la tuyère à air comprimé (18, 20, 21).

22. Dispositif selon la revendication 21, **caractérisé en ce que** l'unité de nettoyage (26) présente au moins une tige de nettoyage (29) qui traverse les logements (17).

23. Dispositif selon la revendication 22, **caractérisé en ce que** la tige de nettoyage est montée à coulissement longitudinal transversalement par rapport au plan de l'élément de dosage (15) et est entraînée.

24. Dispositif selon la revendication 22, **caractérisé en ce que** la ou les tiges de nettoyage (30) sont disposées dans une orientation radiale autour d'un arbre d'entraînement (33) qui s'étend parallèlement au plan de l'élément de dosage (15) et transversalement par rapport à la direction de déplacement des logements (17), la ou les tiges de nettoyage (30) traversant les logements (17) au cours de leur rotation.

25. Dispositif selon l'une des revendications 22 à 24, **caractérisé en ce que** le déplacement de la ou des tiges de nettoyage (30) est couplé au déplacement de l'élément de dosage (15).

26. Dispositif selon les revendications 24 ou 25, **caractérisé en ce que** l'élément de dosage (15) est relié à l'arbre d'entraînement (33) par une transmission coudée.

27. Procédé de dosage et de transport d'urée sèche depuis un récipient de réserve (1) jusqu'à un emplacement de traitement (8), dans lequel l'urée présente la forme de pastilles (2), les pastilles (2) étant séparées une à une et ensuite délivrées dans un écoulement d'air porteur (23), **caractérisé en ce que** les pastilles (2) sont séparées une à une à l'aide d'un élément de dosage (15) qui présente un ou plusieurs logements (17), chaque fois pour une pastille (2), dans lesquels les pastilles (2) se rendent.

28. Procédé selon la revendication 27, **caractérisé en ce que** le transfert des pastilles (2) dans un écoulement d'air porteur (23) s'effectue en amenant les logements (17) devant une tuyère à air comprimé (18, 20, 21) où les pastilles (2) sont libérées par soufflage.

29. Procédé selon les revendications 27 ou 28, **caractérisé en ce que** le dosage des pastilles (2) s'effectue par régulation de la vitesse de déplacement de l'élément de dosage (15) et/ou par régulation de la vitesse de l'écoulement d'air porteur (23).

30. Procédé selon l'une des revendications 27 à 29, **caractérisé en ce qu'**un écoulement d'air porteur permanent (23) règne dans le conduit de transport (7).

31. Procédé selon l'une des revendications 27 à 30, **caractérisé en ce que** de l'air comprimé supplémentaire est introduit dans le conduit de transport (7) en aval de la tuyère à air comprimé (18, 20, 21).

32. Procédé selon la revendication 31, **caractérisé en ce que** l'air comprimé supplémentaire est prélevé en amont de la tuyère à air comprimé (18, 20, 21).

33. Procédé selon les revendications 27 ou 32, **caractérisé en ce qu'**une surpression, de préférence de 0,1 à 1,0 bar et de la façon la plus préférable d'au moins 0,5 bar par rapport à la pression ambiante à l'extrémité du conduit de transport (7) règne dans le conduit de transport (7).

34. Procédé selon l'une des revendications 27 à 33, **caractérisé en ce que** les logements (17) sont libérés par soufflage par un écoulement intermittent d'air comprimé (22).

35. Procédé selon l'une des revendications 27 à 34, **caractérisé en ce que** les logements (17) sont nettoyés après avoir été libérés par soufflage.

36. Procédé de dosage et de transport d'urée sèche depuis un récipient de réserve (1) jusqu'à un emplacement de traitement (8), dans lequel l'urée présente la forme de pastilles (2), les pastilles (2) étant séparées une à une, **caractérisé en ce que** les pastilles (2') sont transférées successivement dans un écoulement d'air porteur (23) qui règne à l'intérieur d'un conduit de transport (7), les pastilles (2") successives formant des coussins d'air séparés entre lesquels aucun échange d'air notable n'a lieu.
